**Europäisches Patentamt**

**European Patent Office**

**Office européen des brevets**

(19)

(11) Veröffentlichungsnummer: **0 118 721**
**B1**

(12) # EUROPÄISCHE PATENTSCHRIFT

(45) Veröffentlichungstag der Patentschrift:
**02.09.87**

(51) Int. Cl.⁴: **C 09 D 3/16,** C 09 D 17/00

(21) Anmeldenummer: **84101028.3**

(22) Anmeldetag: **02.02.84**

(54) Verfahren zur Herstellung von Russkonzentraten auf Nitrocellulosebasis in Chipsform.

(30) Priorität: **11.02.83 DE 3304688**

(43) Veröffentlichungstag der Anmeldung:
**19.09.84 Patentblatt 84/38**

(45) Bekanntmachung des Hinweises auf die Patenterteilung:
**02.09.87 Patentblatt 87/36**

(84) Benannte Vertragsstaaten:
**BE DE FR GB IT NL**

(56) Entgegenhaltungen:
**DE-A-1 720 121**
**FR-A-2 369 325**
**US-A-2 085 528**
**US-A-2 094 146**
**US-A-2 114 713**
**US-A-2 241 251**

(73) Patentinhaber: **Degussa Aktiengesellschaft, Weissfrauenstrasse 9, D-6000 Frankfurt am Main 1 (DE)**

(72) Erfinder: **Engel, Claus Richard, Dr., Veilchenweg 27, D-5303 Waldorf (DE)**
Erfinder: **Dworowy, Lutz, Auguste- Viktoria- Strasse 44, D-5040 Brühl (DE)**

EP 0 118 721 B1

**0 118 721**

## Beschreibung

Die Erfindung betrifft die Herstellung von Rußkonzentraten auf der Basis von nitrocellulosehaltigen Bindemitteln in Chipsform, welche es z. B. Herstellern von Lacken, Anstrichfarben und Druckfarben ermöglichen, in vielfältiger Weise schwarze Produkte dieser Art zu erzeugen und die sonst bei der Dispergierung von Ruß, insbesondere von pulverförmigem Ruß, auftretenden Probleme zu umgehen.

Aus der DE-PS 26 48 639 ist ein Verfahren zur Herstellung derartiger Rußkonzentrate bekannt. Nach diesem Verfahren wird eine Mischung aus alkoholfeuchter Nitrocellulose, Weichmacher, Dispergier- oder Netzmittel und gegebenenfalls Alkydharz unter Zusatz eines Lösungsmittels in einem Kneter vermischt, in diese vorgemischte Masse Ruß eingeknetet, das so erhaltene Produkt zur weiteren Rußdispergierung und unter Verdunstung des Lösungsmittels mit einer Mischwalze zu Fellen ausgewalzt und anschließend in Chips gebrochen.

Nachteilig wirkt sich bei diesem Verfahren aus, daß das eingesetzte Lösungsmittel unter Energieaufwand wieder verdampft werden muß, wodurch es zu einer kritischen Belastung von Arbeitsplatz und Umgebung kommen kann. Das Verfahren ist außerdem personalaufwendig und mit Sicherheitsrisiken behaftet.

Aufgabe der Erfindung ist es, ein Herstellungsverfahren zu finden, das zu Produkten der bekannten Qualität führt, aber ohne Verwendung von Lösungsmitteln auskommt und das außerdem rationeller und mit deutlich geringerem Sicherheitsrisiko betrieben werden kann.

Die Aufgabe wird gelöst durch ein Verfahren zur Herstellung von Rußkonzentraten auf Nitrocellulosebasis in Chipsform, bestehend aus

a) Nitrocellulose
b) gegebenenfalls nitrocelluloseverträglichem Harz
c) Ruß
d) Weichmacher und
e) Netzmittel

wobei die Rezepturbestandteile vermischt, die Mischung dispergiert, die Dispersion zu einer Folie verwalzt, die Folie abgekühlt und zerkleinert wird, welches dadurch gekennzeichnet ist, daß man die Nitrocellulose und gegebenenfalls das Harz mit den übrigen Rezepturbestandteilen intensiv zu einer rieselfähigen Mischung vermengt, die Mischung mittels eines kontinuierlich arbeitenden Kneters in eine Dispersion überführt, wobei zur Dispergierung Temperaturen des Behandlungsguts von maximal 110°C, bevorzugt 50 - 110°C, eingestellt werden, die Dispersion anschließend zu einer Folie verwalzt, die Folie auf eine Temperatur, welche Brechen gestattet, abkühlt und zu Chips bricht.

In dem Dokument US-PS 2 241 251 ist zwar ein ebenfalls lösungsmittelfrei arbeitendes Verfahren zur Einfärbung plastischer Materialien angegeben, bei dem zunächst ein Farbkonzentrat hergestellt wird, das einen organischen Farbstoff oder ein Pigment, wie $TiO_2$, in feindispergierter Form in einem Cellulosederivat, wie Celluloseester und -äther enthält. Daneben ist Nitrocellulose erwähnt.

Das Konzentrat wird jedoch hergestellt, indem das Cellulosederivat mit dem Farbstoff bzw. Pigment vorgemischt und die Mischung in agglutiniertem Zustand diskontinuierlich in der Hitze auf einem Walzenstuhl dispergiert, die Dispersion zu einer Folie verwalzt, die Folie abgekühlt und dann zerkleinert wird.

In dem Dokument ist weder ein rieselfähiger Zustand der Vormischung, noch die Verwendung eines Netzmittels noch Ruß als einzusetzendes Pigment erwähnt und die wegen ihrer leichten Entzündlichkeit besonders gefährliche Nitrocellulose ist nur nebenbei aufgeführt. Ruße ließen sich aufgrund ihres großen Pulvervolumens auch nicht in wirtschaftlichen Zeiträumen nach dem bekannten und für Nitrocellulose problematischen Verfahrensgang dispergieren. Von dem bekannten Verfahren geht daher keine Anleitung oder Anregung zur Lösung der der Erfindung zugrundeliegenden Aufgabe aus.

Sehr zweckmäßig ist, wenn bei der Durchführung des erfindungsgemäßen Verfahrens zur Bereitung der rieselfähigen Mischung die Nitrocellulose vorgelegt und zerkleinert, der Ruß untergemischt und anschließend Weichmacher und Netzmittel zugegeben werden.

Die Nitrocellulose kann in Form handelsüblicher Chips vorgegeben werden, die man in dem zur Herstellung der rieselfähigen Mischung bevorzugt benutzten Planetenmischer zuerst von beispielsweise 6 cm² x 1 mm auf 0,5 cm² x 1 mm zerkleinert und anschließend mit den weiteren Rezepturbestandteilen vermischt. Auch Nitrocellulosewolle ist verwendbar.

Die diskontinuierlich bereitete rieselfähige Mischung aus den Ausgangsbestandteilen a) - e) wird vorteilhaft über eine Dosiervorrichtung in den kontinuierlich arbeitenden Kneter eingespeist, in welchem bei einer Temperatur der Knetmasse von maximal etwa 110, meist 50° - 110°C, der Ruß dispergiert wird. Bevorzugt eingesetzt wird ein sogenannter Co-Kneter (z.B der Firma Buss, Pratteln), eine einwellige Schneckenmaschine, deren Schnecken pro Umfang dreimal unterbrochen sind und neben der Rotation Hubbewegungen entlang der Schneckenachse ausführen. Die Schneckenflügel dienen als Knetwerkzeuge. Deren Wirkung wird durch die axialen Hubbewegungen verstarkt. Der Bewegungsablauf in zwei Ebenen wird durch ein Spezialgetriebe erzeugt.

Wegen der Selbstentzündlichkeit der Nitrocellulose sind besondere Sicherheitsvorkehrungen zu treffen. Besonders wichtig ist, daß der Knetertrog mit mehreren Temperatur- und Druckmeßstellen sowie mit Druckentlastungsstutzen ausgestattet ist.

Anstelle des kontinuierlich arbeitenden Co-Kneters kann mit ähnlicher Wirkung ein Walzenextruder (z. B. der Firma Berstorff, Hannover) benutzt werden, welcher aus einer einwelligen Knetschnecke besteht, die am

2

Auslauf in ein Planetengetriebe übergeht. Man erreicht mit diesem ebenfalls kontinuierlich arbeitenden Gerät eine besonders intensive Knetung, muß aber die Temperaturentwicklung besonders sorgfältig kontrollieren.

Die aus dem Kneter bzw. Walzenextruder ausgetragene plastische Dispersion geht anschließend ohne Zwischenabkühlung durch einen Folienwalzenstuhl, welcher das Ausziehen einer Folie von wunschgemäß eingestellter Stärke ermöglicht. Durch Verwendung eines Folienwalzenstuhls, dessen Walzenpaar mit einer Friktion zu 1 : 1,2 arbeitet, wird eine optimale Feindispergierung des Rußes erreicht. Bei diesem Vorgang werden im Behandlungsgut Temperaturen von maximal 110, vorzugsweise 50 - 100°C eingestellt. Die Folie wird bevorzugt auf eine Stärke von unter 1 mm ausgewalzt und dann einer Abkühlung unterworfen. Mit der Abkühlung wird eine gewisse Versprödung erreicht, welche den nachfolgenden Brechvorgang erleichtert. Es hat sich als zweckmäßig erwiesen, eine Abkühlung auf unter 30°C, vorzugsweise auf 10 - 20°C vorzunehmen. Bei diesen Temperaturen wird die Folie ausreichend spröde, um in einem Brecher, z. B. einem Hackgranulator, gebrochen werden zu können.

Durch Verwendung eines Bandkühlers, d.h. z. B. eines mit Wasser gekühlten Transportbandes aus Stahlblech, lassen sich die Stufen der Dispergierung, der Folienerzeugung, der Abkühlung und der Zerkleinerung zu Chips kontinuierlich betreiben. Die Zerkleinerung der gekühlten Folie wird am besten in einem Hackgranulator vorgenommen, wobei man eine Zerkleinerung auf Abmessungen von 0,5 cm$^2$ x 0,5 mm anstrebt.

Flache und Schichtdicke der Chips bestimmen deren Löslichkeit, so daß diese beiden Größen in Abhängigkeit von dem späteren Einsatzzweck durch entsprechendes Einstellen der Folienwalze und des Granulators in beliebigen Grenzen variiert werden können.

Das neue Verfahren erlaubt die Herstellung von Rußkonzentraten auf Nitrocellulosebasis mit den üblicherweise geforderten Zusammensetzungen.

Besonders günstig sind Zusammensetzungen mit folgenden Mengen der Einsatzstoffe:

| | | | |
|---|---|---|---|
| a) Nitrocellulose | 30 | - 80 | Gew.% |
| b) nitrocelluloseverträgliches Harz | 0 | - 30 | " |
| c) Ruß | 10 | - 50 | " |
| d) Weichmacher | 5 | - 30 | " |
| e) Netzmittel | 0,5 | - 2,5 | " |

Als Ruß können sowohl Furnaceruße als auch Gasruße und Flammruße verwendet werden. Besonders vorteilhaft sind Furnace- oder Gas-Farbruße, welche einer oxidativen Nachbehandlung unterzogen worden sind. Solche Ruße zeichnen sich durch einen Gehalt an flüchtigen Bestandteilen von über 0,5 Gew.% aus.

Wenn die Nitrocellulose mit Harzen anderer Zusammensetzung kombiniert werden soll, so müssen diese Harze mit dem Hauptbindemittel verträglich sein. Als geeignet haben sich Alkydharze, Polyamidharze, Maleinatharze, Ketonharze oder Schellack erwiesen. Auch Mischungen dieser Harze sind in Verbindung mit dem Hauptbindemittel Nitrocellulose einsetzbar.

Als Weichmacher sind verwendbar:

Phthalate (Phthalsäureester), wie z. B. Dioctylphthalat (DOP), Dimethylphthalat, Diäthylphthalat, Dibutylphthalat, evtl. kombiniert mit Diethylphthalat, Dicyclohexylphthalat; höhermolekulare Ester aus Decyl- und Tridecylalkohol; Mischester-Weichmacher, wie Butyloctyl-, Butyldecyl-, Butylbenzyl-phthalat, Diamylphthalat, Diäthylhexylphthalat, Dimethylglykolphthalat, Dicaprylphthalat und dgl.; Phosphate, wie z. B. Trikresylphosphat. Triphenylphosphat, Triphenylphosphat, kombiniert mit Trikresylphosphat und Phthalaten, Diphenylkresylphosphat, Triphenylphosphat, Diphenyl-2-äthylhexylphosphst, Tri(2-äthylhexyl)-phosphat, Tris(butoxyäthyl)-phosphat; acyclische (aliphatische) Dicarbonsäureester, wie z. B. Ester der Adipinsäure und Sebacinsäure (Dioctyladipat), Diacyladipat, Dicapryladipat, Dibutylsebacat, 2-Athylhexylsebacat, Dioctylsebacat, Dihexylsebacat, Butylbenzylsebacat usw.; Ester von Fettsäuren, wie z. B. Butyloleat oder Butylstearat, Methyl- und Butylester der acetylierten Ricinolfettsäuren, Fettsäureglykolester, Triäthylenglykol-di-(2-äthylbutyrat), Ester der Epoxystearinsäure, Citronensäureester, wie z. B. Acetyltributylcitrat, Acetyltriäthylcitrat; polymere Weichmacher, wie z. B. Polyester aus Dicarbonsäuren (Adipin-, Sebacin-, Phthalsäure) und Glykolen (Propylenglykol, 2-Äthyl-1,3-hexandiol und dgl.), z. T. modifiziert mit manofunktionellen Säuren oder Alkoholen; MG ca. 850 - 8000. Auch epoxydierte Öle, Butadienacrylnitril-Copolymere können als Weichmacher in Betracht kommen.

Als Netzmittel eignen sich besonders Metalloleate, Metalloctoate und Phenylendiamin.

Die nach dem erfindungsgemäßen Verfahren zugänglichen Rußkonzentrate können als Pigmentierungsmittel für Lacke, Anstrichfarben und Druckfarben verwendet werden. Dabei können dem jeweiligen Anwendungssystem 0,01 - 20 Gew.% an Rußkonzentrat zugesetzt werden.

Unter Lacken und Anstrichmittel werden flüssige bis pastenförmige Stoffe oder Stoffgemische, welche durch verschiedene Verfahren, wie Streichen oder Spritzen auf die zu belegenden Oberflächen aufgebracht werden und durch physikalische oder chemische Trocknung einen auf dem Untergrund haftenden Überzug ergeben, verstanden.

Verwendet werden kann das Rußkonzentrat ferner als Pigmentierungsmittel für Druckfarben, wie z. B. Zeitungsdruckfarben, Werkdruck- und Akzidenzfarben, Illustrations- und Autotypiedruckfarben, geschönte Druckfarben, Heatsetinks bzw. Moisture- und Steamsetinks, die bei den verschiedenen Druckmethoden, wie Hochdruck, Gummidruck, Flachdruck, Tiefdruck u.a.m. eingesetzt werden.

**0 118 721**

Die Erfindung wird nachfolgend anhand von Ausführungsbeispielen zum nächstliegenden Stand der Technik und zum Erfindungsgegenstand weiter erläutert. Zuvor werden die für die vorgenommenen Vergleiche herangezogenen Testmethoden vorgestellt.

**Testmethoden zur Beurteilung der Rußkonzentrate:**

Die Bestimmung des Grindometerwertes erfolgt nach DIN 53203. Der die Rußverteilung widerspiegelnde Grindometerwert wird an einer Dispersion der hergestellten Chips in Butylacetat auf dem sogenannten Hegmann-Block ermittelt.

Die Bestimmung der Farbtiefe wird wie folgt vorgenommen:

In einem PE-Becher werden 96 g NC-Verdünnung (38,9 Gew.-Teile Methyläthylketon + 27,8 Gew.-Teile Butylacetat + 33,3 Gew.-Teile Toluol) und 24 g Rußnitrocellulosechips eingewogen. Die Chips werden bei 4000 UpM (Umfangsgeschwindigkeit = 10,472 m/min) während 15 Minuten gelöst. Ein Teil von der Chipslösung wird mit Hilfe eines Spiralfilmaufziehgerätes als Film einer Naßfilmdicke von 200 Mikrometer auf einen weißen Glanzkarton aufgezogen. Die Farbtiefe wird an dem trockenen Film mit dem Densitometer an 5 verschiedenen Stellen, jeweils als sogenannter Densitometerindex, bzw. mit dem RFC3 an 2 verschiedenen Stellen gemessen. Aus der Anzahl der gemessenen Farbtiefewerte wird der Durchschnittswert gebildet.

Die Bestimmung des Glanzes erfolgt mit dem Glanzmeßgerät nach Gardner bei einem Winkel von 20°. Das Meßergebnis sind sogenannte Reflektometerwerte.

Die Auslaufzeit des Endprodukts wird nach DIN 53211 bestimmt.

Im Folgenden wird die Überlegenheit des erfindungsgemäßen Verfahrens gegenüber dem Stand der Technik experimentell belegt.

**Vergleich von Herstellung und Eigenschaften eines gemäß DE-PS 26 48 639 erhältlichen Rußkonzentrats mit einem erfindungsgemäß resultierenden Rußkonzentrat derselben Ausgangszusammensetzung**

Es wird jeweils ein Standardprodukt nach der DE-PS 26 48 639 und nach dem erfindungsgemäßen Verfahren hergestellt und der dazu erforderliche Energieaufwand sowie die Produktqualität beurteilt.

In den Rezepturen bedeutet die jeweils bei der Viskosität der als Wolle oder als Chips eingesetzten Nitrocellulose angegebene Gewichtsmenge in g dasjenige Gewicht an Trockensubstanz des Einsatzstoffs, mit dem in einer Standardmeßlösung der in der DIN 53179 festgelegte Viskositätswert erreicht wird.

**Beispiel 1** (bekanntes Verfahren)

Rezeptur

| | | | |
|---|---|---|---|
| NC-Wolle mit eingestellter Viskosität bei 24 g (mit 35 Gew.% Äthanol) | 22,7 | Gew.% | T* |
| NC-Chips mit eingestellter NC-Viskosität bei 24 g, ca. 6 cm$^2$ x 1 mm (mit 18 Gew.% Dioctylphthalat) | 29,7 | " | " |
| Weichmacher Dioctylphthalat | 27,2 | " | " |
| Netzmittel Barium-Octoat (in 50 Gew.% Xylol) | 2,4 | " | " |
| Farbruß FW 2 | 18,0 | " | " |

* T = gerechnet als Trockensubstanz

Der Ansatz wird mit 5,3 Gew.% Äthylacetat versetzt.

Ausführung:

Zur Vormischung werden NC-Wolle NC-Chips, Weichmacher, Netzmittel und Lösungsmittel in einem 400 l Kneter mit Z-Schaufeln ca. 1,5 Stunden geliert. Dann wird der Farbruß portionsweise zugegeben und nochmals ca. 1,5 Stunde geknetet. Die Knetmasse beträgt ca. 250 kg.

Zur Feindispergierung wird die Knetmasse auf einer Mischwalze (Zweiwalze mit Friktion 1 : 1,2) 6 - 8 Walzenpassagen unterworfen und bis auf ca. 10 Gew.% vom Lösungsmittel befreit. Der Durchsatz beträgt ca. 17,5 kg/Stunde.

Zur Trocknung wird das feindispergierte und bei der letzten Walzenpassage als dünne Folie abgezogene Material in einer Trockenkammer mittels eines Warmluftstromes von 40°C von Lösungsmittelresten befreit. Hierbei tritt eine Versprödung der Folie ein. Die Verweilzeit des Ansatzes beträgt in dieser Stufe ca. 14 Stunden.

4

Das versprödete Material wird anschließerd in einem Hackgranulator mit Messerrotor und Trommelsieb zu einer Korngröße von 1 cm² x 0,5 mm (Siebmaschenweite von ca 1 cm²) hackgranuliert. Dazu wird ca. 1 Stunde benötigt.

Ergebnis:

| | |
|---|---|
| Grindometerwert: | 13 µm |
| Farbtiefe (Densitometerindex): | 3,1 |
| Glanz: | 92 % |
| Auslaufzeit (DN-Becher, 44 mm-Duse): | 90 sec. |

**Beispiel 2** (bekanntes Verfahren)

Rezeptur:

| | | | |
|---|---|---|---|
| NC-Wolle mit eingestellter Viskosität bei 21 g (mit 35 Gew.% Äthanol) | 23,0 | Gew.% | T* |
| NC-Chips, mit eingestellter NC-Viskosität bei 21 g ca. 6 cm² x 1 mm (mit 18 % Dioctylphthalat) | 30,0 | " | " |
| Weichmacher Dioctylphthalat | 27,0 | " | |
| Netzmittel p-Phenylendiamin | 2,0 | " | " |
| Farbruß FW 2 | 18,0 | " | |

*T = gerechnet als Trockensubstanz

Der Ansatz wird mit 3,5 Gew.% Äthylacetat versetzt.

Ausführung: wie bei Beispiel 1

Ergebnis:

| | |
|---|---|
| Grindometerwert: | 20 µm |
| Farbtiefe (Densitometerindex): | 3,0 |
| Glanz: | 89 % |
| Auslaufzeit (DIN-Becher, 4 mm-Duse): | 150 sec. |

**Beispiel 3** (bekanntes Verfahren)

Rezeptur:

| | | | |
|---|---|---|---|
| NC-Wolle mit eingestellter Viskosität bei 30 g (mit 35 Gew.% Butanol) | 50,0 | Gew.% | T* |
| Weichmacher Carbamidsäureester | 18,5 | " | |
| Netzmittel p-Phenylendiamin | 1,5 | " | " |
| Farbruß Printex V | 30,0 | " | |

*T = gerechnet als Trockensubstanz

Ausführung: wie bei Beispiel 1

Ergebnis:

| | |
|---|---|
| Grindometerwert: | > 20 µm |
| Farbtiefe (Densitometerindex): | 2,5 |
| Glanz: | 65 % |
| Auslaufzeit (DIN-Becher, 4 mm-Düse): | 25 sec. |

**Beispiel 4** (bekanntes Verfahren)

Rezeptur:

| | | | |
|---|---|---|---|
| NC-Wolle mit eingestellter Viskosität bei 30 g (mit 35 Gew.% Butanol) | 44,0 | Gew.% | T* |
| Weichmacher Carbamidsäureester | 14,5 | " | |
| p-Phenylendiamin | 1,5 | " | " |
| Farbruß Spezialschwarz 15 | 40,0 | " | |

*T = gerechnet als Trockensubstanz

# 0 118 721

Ausführung: wie bei Beispiel 1

Ergebnis:

| | |
|---|---|
| Grindometerwert: | > 20 µm |
| Farbtiefe (Densitometerindex): | 2,5 |
| Glanz: | 65 % |
| Auslaufzeit (DIN-Becher, 4 mm-Düse): | 20 sec. |

**Beispiel 5** (erfindungsgemäßes Verfahren)

Rezeptür:

| | | | |
|---|---|---|---|
| NC-Chips mit eingestellter NC-Viskosität bei 24 g bis ca. 6 cm$^2$ x 1 mm (mit 18 Gew.% Dioctylphthalat oder Dibutylphthalat) | 52,4 | Gew.% | T* |
| Weichmacher Dioctylphthalat | 27,2 | " | |
| Netzmittel Bariumoctoat in 50 Gew.%' Dioctylphthalat | 2,4 | " | " |
| Farbruß FW 2 | 18,0 | " | |

*T = gerechnet als Trockensubstanz

Aüsführung:

Die Vormischung erfolgt in einem Planetenmischer mit 2 Rotoren, die sich um eine gemeinsame Achse und außerdem um sich selbst drehen. Im Planetenmischer (300 l Inhalt) werden die NC-Chips aüf eine rieselfähige Körnüng von ca. 0,5 cm$^2$ zerkleinert; anschließend wird der Ruß langsam untergemischt und dann der Weichmacher mit dem Netzmittel zugegeben. Die Einhaltung der angegebenen Reihenfolge ist sehr zweckmäßig. Die Mischzeit für eine Beschickung von 170 kg Ausgangsmaterial beträgt etwa 0,75 Stunde.

Die Dispergierung erfolgt in einem kontinuierlich arbeitenden Einwellen-Schneckenkneter mit variabler Drehzahl. Die rieselfähige Vormischüng wird dem Kneter über eine Dosiereinrichtung zugeführt. Bei einer Temperatur von max. 110° C der Knetmasse wird der Ruß in dem Ansatz fein verteilt. Der Durchsatz pro Stunde beträgt ca. 100 kg.

Die Verwalzung zu einer Folie erfolgt in einem Zweiwalzenstuhl, dessen Walzen mit einer Friktion von 1 : 1,2 arbeiten. Dadurch werden zusätzliche Scherkräfte ausgeübt, die eine weitere Erhöhüng des Verteilungsgrades des Rußes begünstigen.

Es wird eine Folie von ca. 0,5 mm ausgezogen.

Die erzeugte Folie wird auf einem mit Wasser gekühlten Transportband aus Stahlblech von ca. 80° C auf 15 - 20° C heruntergekühlt. Bei dieser Temperatur ist eine Granulierung ohne Verklebung der Chips möglich.

Die vom Kühlband kommende, noch etwas plastische aber bereits brechbare Folie läuft in einen Hack-Granulator und wird dort auf Chips von 0,5 cm$^2$ x 0,5 mm zerkleinert.

Ergebnis:

| | |
|---|---|
| Grindometerwert: | 10 µm |
| Farbtiefe (Densitometerindex): | 3,2 |
| Glanz: | 94 % |
| Auslaufzeit (DIN-Becher, 4 mm-Düse): | 138 sec. |

**Beispiel 6** (erfindungsgemäßes Verfahren)

Rezeptur:

| | | | |
|---|---|---|---|
| NC-Chips mit eingestellter NC-Viskosiäät bei 21 g, ca. 6 cm$^2$ x 1 mm (mit 18 Gew.% Dioctylphthalat oder Dibutylphthalat) | 53,0 | Gew.% | T* |
| Weichmacher Dioctylphthalat | 27,0 | " | |
| Netzmittel p-Phenylendiamin | 2,0 | " | " |
| Farbruß FW 2 | 18,0 | " | |

*T = gerechnet als Trockensubstanz

Ausführung: wie bei Beispiel 5

6

Ergebnis:
Grindometerwert:                                    12 μm
Farbtiefe (Densitometerindex):                      3,2
Glanz:                                              91 %
Auslaufzeit (DIN-Becher, 4 mm-Düse):               172 sec.

**Beispiel 7**: (erfindungsgemäßes Verfahren)

Rezetür:
NC-Chips mit eingestellter NC-Viskosität bei 30 g,
ca. 6 cm$^2$ x 1 mm
(mit 18 Gew.% Dioctylphthalat oder Dibutylphthalat)     50,0    Gew.%    T*
Weichmacher Carbamidsäureester                          18,5    ″
Netzmittel p-Phenylendiamin                              1,5    ″        ″
Farbruß Printex V                                       30,0    ″
*T = gerechnet als Trockensubstanz

Ausführung: wie bei Beispiel 5

**Ergebnis**:
Grindometerwert:                                    < 20 μm
Farbtiefe (Densitometerindex):                      2,7
Glanz:                                              68 %
Auslaufizet (DIN-Becher, 4 mm-Düse):                20 sec.

**Beispiel 8**: (erfindungsgemäßes Verfahren)
Rezeptur:
NC-Chips mit eingestellter Viskositat bei 30 g,
ca. 6 cm$^2$ x 1 mm
(mit 18 Gew.% Dioctylphthalat oder Dibutylphthalat)     44,0    Gew.%    T*
Weichmacher Carbamidsäureester                          14,5    ″
p-Phenylendiamin                                         1,5    ″        ″
Farbruß Spezialschwarz 15                               40,0    ″
*T = gerechnet als Trockensubstanz

Ausführung: wie bei Beispiel 5

Ergebnis:
Grindometerwert:                                    < 20 μm
Farbtiefe (Densitometerindex):                      2,7
Glanz:                                              68 %
Auslaufzeit (DIN-Becher, 4 mm-Düse)                 20 sec.

Nachfolgend wird anhand der Ausführungsbeispiele 1 und 5 eine Gegenüberstellung zwischen den Kriterien "Energieaufwand", "Durchsatzleistung" und "anwendungstechnische Eigenschaften" beim bekannten Verfahren und beim erfindungsgemäßen Verfahren vorgenommen.
Der Energieaufwand summiert sich aus den folgenden Einzelposten:

Beisp. 1 (gem DE-PS 26 48 639)                      Beisp. 5 (erfindungsgem. Verfahren)

Kneter              0,22 kWh/kg Prod.               Planetenmischer    0,12    kWh/kg
Mischwalze (mit                                     Kneter             0,3     ″
Verdamfung des                                      Zweiwalze          0,03
Lösüngsmittels      1,84 kWh/kg Prod.               Kühlband           0,02
Granulator          0,1 kWh/kg Prod.                Granulator         0,2
                    2,16 kWh/kg                                        0,67    kWh/kg

Die Durchsatzleistung bei dem Vergleichsverfahren ist aus folgender Gegenüberstellung ersichtlich:

**0 118 721**

| Beisp. 1 (gem. DE-PS 26 48 639) | | Beisp. 5 (erfindungsgem. Verfahren) | |
|---|---|---|---|
| Zeitbedarf für das Kneten von 250 kg | ca. 3 Std. | Zeitbedarf für die Bereitung von 250 kg Vormischung | ca. 1 Std. |
| Zeitbedarf für das Walzen unter Abtreiben des Lösungsmittels für 250 kg | ca. 14 Std. | Zeitbedarf für die Dispergierung von 250 kg Vormischung | ca. 2,5 Std. |
| Zeitbedarf für die Hackgranulierung von 250 kg | ca. 1,5 Std. | Zeitbedarf für die Folienwalzung, -kühlung und -zerkleinerung von 250 kg Dispersion | ca 1,5 Std. |

Gegenüberstellung der anwendungstechnischen Eigenschaften der Vergleichsbeispiele:

Konzentrate

| | Beisp. 1 | Beisp. 5 |
|---|---|---|
| Grindometerwert µm | 13 | 10 |
| Farbtiefe (Densitometerindex): | 3,1 | 3,20 |
| Glanz bei 20° % | 92 | 94 |
| Auslaufzeit (DIN-Becher,4 mm-Duse): sec. | 90 | 138 |

Daraus ergibt sich, daß das ohne Verwendung von Lösungsmitteln auskommende erfindungsgemäße Verfahren zusätzlich eine erhebliche Energieeinsparung bei vergrößerter Durchsatzleistung ohne Qualitätseinbuße erzielen läßt.

**Beispiel 9** (bekanntes Verfahren)

Rezeptur:

| NC-Wolle mit eingestellter Viskosität bei 30 g, (mit 35 Gew.% Äthanol) | 51,5 | Gew.% | T* |
|---|---|---|---|
| Weichmacher Dibutylphthalat | 10,0 | " | |
| Alkydharz (Alkydal®F 25 der Fa. Hoechst) | 17,0 | " | |
| Netzmittel Bariumoctoat (in 50 Gew.% Xylol) | 1,5 | " | |
| Farbruß FW2 | 20,0 | " | |

*T = gerechnet als Trockensubstanz

**Ausfuhrung**: wie bei Beispiel 1 (Harzzusatz bei Bereitung der Vormischung)

Ergebnis:

| Grindometerwert: | 25 µm |
|---|---|
| Farbtiefe (Densitometerindex): | 2,81 |
| Glanz: | 88 % |
| Auslaufzeit (DIN-Becher, 4 mm Düse): | 140 sec. |

**Beispiel 10** (erfindungsgemäßes Verfahren)

Rezeptur:

| NC-Chips mit eingestellter NC-Viskosität bei 30 g, ca. 6 mm² x 1 mm (mit 18 % Dioctylphthalat oder Dibutylphthalat) | 51,5 | Gew.% | T* |
|---|---|---|---|
| Weichmacher Dibutylphthalat | 10,0 | " | |
| Alkydharz (Skadonal® 150x70 der Fa. Skado-Archer-Daniels GmbH, Metten) | 17,0 | " | |
| Netzmittel Bariumoctoat (in 50 Gew.% Dioctylphthalat) | 1,5 | " | |
| Farbruß FW2 | 20,0 | " | |

*T = gerechnet als Trockensubstanz

**Ausführung**: wie bei Beispiel 5 (Harzzusatz bei Vormischung im Planetenmischer)

8

**Ergebnis**:

| | |
|---|---|
| Grindometerwert | 17 µm |
| Farbtiefe (Densitometerindex): | 2,9 |
| Glanz: | 88 % |
| Auslaufzeit (DIN-Becher, 4 mm-Düse): | 125 sec. |

Zusammengenommen weist das erfindungsgemöße Verfahren folgende Vorteile gegenüber dem bisher üblichen Verfahren auf:

| erfindüngsgemäßes Verfahren | bekanntes Verfahren |
|---|---|
| Kein Einsatz von Lösüngsmittel - umweltfreundliche Prodüktion | Lösungsmittelverwendüng obligatorisch |
| Teilkontinuierlich durchführbar > t | Nur diskontinuierlich dürchführbar |
| Kurzzeitiges Vermengen der Rezepturbestandteile | Langwieriges Kneten der Rezepturbestandteile zur Vermengung |
| Dispergierung der Mischüng durch kurzfristiges Kneten | Dispergierung der Mischung durch mehrmalige Passage eines Zweiwalzenstuhls |
| Erzeugung qualitätskonformer Fertigprodukte | Qualitätsschwankungen aufgrund des chargenweisen Betriebs |
| Geringer Rohstoff-, Energie-, Zeit- und Personalbedarf | Erhöhter Rohstoff-, Energie-, Zeit- und Personalbedarf |

**Patentansprüche**

1. Verfahren zur Herstellung von Rußkonzentraten auf Nitrocellulosebasis in Chipsform, bestehend aus
a) Nitrocellulose
b) gegebenenfalls nitrocelluloseverträglichem Harz
c) Ruß
d) Weichmacher und
e) Netzmittel
wobei die Rezepturbestandteile vermischt, die Mischung dispergiert, die Dispersion zu einer Folie verwalzt, die Folie abgekühlt und zerkleinert wird,
dadurch gekennzeichnet,
daß man die Nitrocellulose und gegebenenfalls das Harz mit den übrigen Rezepturbestandteilen intensiv zu einer rieselfähigen Mischung vermengt, die Mischung mittels eines kontinuierlich arbeitenden Kneters in eine Dispersion überführt, wobei zur Dispergierung Temperaturen des Behandlungsguts von maximal 110°C, bevorzugt 50 - 110°C, eingestellt werden, die Dispersion anschließend zu einer Folie verwalzt, die Folie auf eine Temperatur, welche Brechen gestattet, abkühlt und zu Chips bricht.
2. Verfahren nach Anspruch 1,
dadurch gekennzeichnet,
daß zur Bereitung der rieselfähigen Mischung die Nitrocellulose vorgelegt und zerkleinert, der Ruß untergemischt und anschließend Weichmacher und Netzmittel zugegeben werden.
3. Verfahren nach Anspruch 1 oder 2,
dadurch gekennzeichnet,
daß die Dispersion mittels eines mit einer Friktion von 1 : 1,2 arbeitenden Zweiwalzenstuhls bei einer Temperatur des Behandlungsguts von maximal 110, vorzugsweise 50 - 100°C, zu einer Folie von unter 1 mm Stärke ausgewalzt und die Folie dann auf eine Temperatur unter 30°C, vorzugsweise auf 10 - 20°C abgekühlt wird.
4. Verfahren nach Anspruch 3,
dadurch gekennzeichnet,
daß die Folie auf einem Bandkühler abgekühlt wird.
5. Verfahren nach den Ansprüchen 1 bis 4,
dadurch gekennzeichnet,
daß man die Ausgangsstoffe in folgenden Mengen einsetzt:

| a) Nitrocellulose | 30 | - | 80 | Gew.% |
| b) Nitrocelluloseverträgliches Harz | 0 | - | 30 | " |
| c) Ruß | 10 | - | 50 | " |
| d) Weichmacher | 5 | - | 30 | " |
| e) Netzmittel | 0,5 | - | 2,5 | " |

6. Verfahren nach Anspruch 5,
dadurch gekennzeichnet,
daß Furnace- oder Gas-Farbruße, welche vorzugsweise oxidativ nachbehandelt sind, eingesetzt werden.

7. Verfahren nach Anspruch 5 oder 6,
dadurch gekennzeichnet,
daß als nitrocelluloseverträgliche Harze Alkydharz, Polyamidharz, Maleinatharz, Ketonharz oder Schellack, einzeln oder kombiniert, eingesetzt werden.

8. Verfahren nach den Ansprüchen 5 bis 7,
dadurch gekennzeichnet,
daß als Netzmittel ein Metalloleat, Metalloctoat oder Phenylendiamin eingesetzt wird.

9. Verwendung der nach den Ansprüchen 1 bis 8 erhältlichen Rußkonzentrate als Pigmentierungsmittel für Lacke, Anstrichfarben und Druckfarben.

## Claims

1. A process for the production of nitrocellulose-based carbon black concentrates in chip form consisting of
a) nitrocellulose,
b) optionally nitrocellulose-compatible resin,
c) carbon black,
d) plasticizer and
e) wetting agent,
the constituents of the formulation being mixed, the resulting mixture dispersed, the dispersion being rolled to form a sheet, the sheet being cooled and then size-reduced, characterized in that the nitrocellulose and the resin, if any, are intensively mixed with the other constituents of the formulation to form a free-flowing mixture, the mixture thus formed is converted into a dispersion by means of a continuous keader, temperatures of at most 110°C and preferably from 50 to 110°C being adjusted in the material being treated for the dispersion step, the dispersion is then rolled to form a sheet, the sheet is cooled to a temperature which allows breaking and is then broken into chips.

2. A process as claimed in Claim 1, characterized in that, to prepare the free-flowing mixture, the nitrocellulose is initially introduced and size-reduced, the carbon black is mixed in and plasticizer and wetting agent are then added.

3. A process as claimed in Claim 1 or 2, characterized in that the dispersion is rolled out into a sheet less than 1 mm thick on a two-roll stand operating with a friction of 1:1.2 at a material temperature of at most 110°C and preferably of from 50 to 100°C and the film thus formed is cooled to a temperature below 30°C and preferably to a temperature of 10 to 20°C.

4. A process as claimed in Claim 3, characterized in that the sheet is cooled on a belt cooler.

5. A process as claimed in Claims 1 to 4, characterized in that the starting materials are used in the following amounts:

| a) nitrocellulose: | 30 | - | 80 | % by weight |
| b) nitrocellulose-compatible resin: | 0 | - | 30 | % by weight |
| c) carbon black: | 10 | - | 50 | % by weight |
| d) plasticizer: | 5 | - | 30 | % by weight |
| e) wetting agent: | 0.5 | - | 2.5 | % by weight |

6. A process as claimed in Claim 5, characterized in that furnace or gas pigment blacks, which have preferably been after-treated by oxidation, are used.

7. A process as claimed in Claim 5 or 6, characterized in that alkyd resin, polyamide resin, maleate resin, ketone resin or shellac, individually or in combination, are used as nitrocellulose-compatible resins.

8. A process as claimed in Claims 5 to 7, characterized in that a metal oleate, metal octoate or phenylene diamine is used as the wetting agent.

9. The use of the carbon black concentrates obtainable by the process claimed in Claims 1 to 8 as pigmenting agents for lacquers, paints and printing inks.

## Revendications

1. Procédé pour la préparation de concentrés de noir de carbone à base de nitrocellulose sous forme de pastilles, composés de:

a) nitrocellulose
b) éventuellement résine compatible avec la nitrocellulose
c) noir de carbone
d) plastifiant et
e) agent mouillant,
par lequel on mélange les composants de la formulation, on disperse le mélange, on lamine la dispersion en une feuille, on refroidit la feuille et on la fragmente, procédé caractérisé en ce que l'on mélange énergiquement la nitrocellulose et éventuellement la résine avec les autres composants de la formulation pour obtenir une composition apte à s'écouler, on transforme la composition en une dispersion au moyen d'un malaxeur fonctionnant en continu, en portant, pour l'opération de dispersion, le produit en traitement à des températures de 110°C au maximum, de préférence de 50 à 110°C, on lamine ensuite la dispersion en une feuille, on refroidit la feuille à une température permettant la fragmentation, puis on la fragmente en pastilles.

2. Procédé selon la revendication 1, caractérisé en ce que, pour la préparation de la composition apte à s'écouler, on dispose au préalable et on fragmente la nitrocellulose, on incorpore le noir de carbone et on ajoute ensuite plastifiant et agent mouillant.

3. Procédé seion la revendication 1 ou 2, caractérisé en ce que l'on lamine la dispersion en une feuille de moins de 1 mm d'épaisseur, au moyen d'un broyeur à deux cylindres fonctionnant à une friction de 1 : 1,2, à une température du produit en traitement de 110°C au maximum, de préférence de 50-100°C, et on refroidit ensuite la feuille a une temperature inférieure à 30°C de préférence à 10-20°C.

4. Procédé selon la revendication 3, caractérisé en ce que la feuille est refroidie sur un refroidisseur à bande.

5. Procédé selon l'une quelconque des revendications 1 à 4, caractérisé en ce que l'on utilise les matiéres premières en quantités suivantes:

| | | | | |
|---|---|---|---|---|
| a) nitrocellulose | 30 | - | 80 | % en poids |
| b) résine compatible avec la nitrocellulose | 0 | - | 30 | " |
| c) noir de carbone | 10 | - | 50 | " |
| d) plastifiant | 5 | - | 30 | " |
| e) agent mouillant | 0,5 | - | 2,5 | " |

6. Procédé selon la revendication 5, caractérisé en ce que l'on utilise des noirs de type noir au tunnel, qui sont de préférence post-traités par oxydation.

7. Procédé selon la revendication 5 ou 6, caractérisé en ce que l'on utilise en tant que résine compatible avec la nitrocellulose, une résine alkyde, une résine polyamide, une résine maléinate, une résine cétonique ou de la gomme-laque, seules ou en combinaison.

8. Procédé selon l'une quelconque des revendications 5 à 7, caractérisé en ce que l'on utilise en tant qu'agent mouillant un oléate métallique, un octoate métallique ou de la phénylènediamène.

9. Utilisation des concentrés de noir pouvant être obtenus selon les revendications 1 à 8 en tant qu'agents de pigmentation pour vernis, peintures et encres d'imprimerie.